# EUROPEAN PATENT APPLICATION

(11) **EP 4 685 650 A1**
(43) Date of publication of application: **28.01.2026**
(21) Application number: 24777668.5
(22) Date of filing: 07.03.2024
(51) Int. Cl.: G06F 11/14

(54) **DATABASE RECOVERY METHOD AND APPARATUS**

(30) Priority: 29.03.2023 CN 202310323023
(71) Applicant: Huawei Cloud Computing Technologies Co., Ltd., Guiyang, Guizhou 550025 (CN)
(72) Inventor: ZHAO, Cheng, Guiyang, Guizhou 550025 (CN); WU, Lengdong, Guiyang, Guizhou 550025 (CN); NIU, Chenyang, Guiyang, Guizhou 550025 (CN); WANG, Meng, Guiyang, Guizhou 550025 (CN); ZHANG, Jiwei, Guiyang, Guizhou 550025 (CN)
(74) Representative: Pfenning, Meinig & Partner mbB
(86) International application number: PCT/CN2024/080464
(87) International publication number: WO 2024/198878

(57) **Abstract**

This application discloses a database recovery method and apparatus, and pertains to the field of database technologies. After receiving a recovery instruction for a database, a computer device queries, based on a recovery moment indicated by the recovery instruction, an LSN and time association log for an LSN corresponding to the recovery moment, obtains recovery data of the database based on the LSN corresponding to the recovery moment, and performs data recovery on the database based on the recovery data. Then, a start LSN used by a database corresponding to the recovery moment is greater than an LSN corresponding to a current moment. After the database is rolled back from the current moment to a historical moment, an LSN greater than the LSN corresponding to the current moment is applied to the database starting from the LSN corresponding to the current moment. An LSN jump mechanism is used to ensure that an LSN used after the database is recovered does not conflict with an LSN used before the database is recovered, so that the database can be recovered to any time point for a plurality of times.

## Description

This application claims priority to Chinese Patent Application No. 202310323023.5, filed on March 29, 2023, and entitled "DATABASE RECOVERY METHOD AND APPARATUS", which is incorporated herein by reference in its entirety.

### TECHNICAL FIELD

This application relates to the field of database technologies, and in particular, to a database recovery method and apparatus.

### BACKGROUND

A database recovery technology is used to recover a database to a previous state (a historical time point). Currently, there are mainly two database recovery mechanisms: a database point-in-time recovery (point-in-time recovery, PITR) mechanism and a database flashback (flashback) mechanism. When the database point-in-time recovery mechanism is used, each time database recovery is performed, a new database instance is first recovered through a full backup of the database. Then, an incremental backup of the database is applied to the new database instance to recover the database to a database at a specified time point. This requires a large amount of storage space. The database flashback mechanism is a database recovery mechanism that enables a database to roll back from a current state to a historical state. A new database instance does not need to be created. Instead, a current database is recovered to a historical database. Therefore, compared with the database point-in-time recovery mechanism, the database flashback mechanism occupies less storage space.

Currently, database flashback is started in two modes: a read-only mode and a read/write mode. If the database flashback is started in the read-only mode, a database obtained through recovery supports reading data, but does not support writing data. If the database flashback is started in the read/write mode, a database obtained through recovery supports both reading data and writing data. However, backup data generated after a historical time point of the flashback is discarded. As a result, some historical data is lost. Therefore, an application limitation of the current database flashback mechanism is high.

### SUMMARY

This application provides a database recovery method and apparatus, to resolve a problem that an application limitation of a current database flashback mechanism is high.

According to a first aspect, a database recovery method is provided. The method includes: In response to receiving, at a first moment, a first recovery instruction for a database, a computer device queries, based on a first recovery moment indicated by the first recovery instruction, a log sequence number (log sequence number, LSN) and time association log for a first LSN corresponding to the first recovery moment. The LSN and time association log is used to record LSNs respectively corresponding to a plurality of moments in the database. The first recovery moment is earlier than the first moment in time sequence. The computer device obtains first recovery data of the database based on the first LSN. The computer device performs data recovery on the database based on the first recovery data, to obtain a database corresponding to the first recovery moment. Then, a start LSN used by the database corresponding to the first recovery moment is greater than an LSN corresponding to the first moment.

In this application, after a current database is rolled back to a historical moment according to a recovery instruction for the current database, an LSN corresponding to the historical moment is no longer used as a start point, but an LSN corresponding to a current moment is used as the start point. Further, an LSN greater than the LSN corresponding to the current moment is used to identify a redo log generated after the database is rolled back to the historical moment, and an LSN jump mechanism is used to ensure that an LSN used after the database is recovered does not conflict with an LSN used before the database is recovered. In this way, after the database is recovered, a redo log generated after the recovery moment does not need to be discarded, so that the database supports recovery (flashback) at any time point for a plurality of times. This improves flexibility of database recovery.

Optionally, the start LSN used by the database corresponding to the first recovery moment is a next LSN of the LSN corresponding to the first moment.

Optionally, after the computer device performs data recovery on the database based on the first recovery data to obtain the database corresponding to the first recovery moment, in response to receiving an operation instruction for the database corresponding to the first recovery moment, the computer device executes the operation instruction, and generates a redo log corresponding to the operation instruction. An LSN of the redo log is greater than the LSN corresponding to the first moment.

Optionally, an implementation in which the computer device obtains the first recovery data of the database based on the first LSN includes: The computer device obtains a first full backup snapshot from a full backup of the database based on the first LSN, where an LSN of the first full backup snapshot is less than the first LSN; and the computer device obtains a first redo log set from an incremental backup of the database based on the LSN of the first full backup snapshot and the first LSN, where the first redo log set includes a redo log whose LSN is between the LSN of the first full backup snapshot and the first LSN. Correspondingly, an implementation process in which the computer device performs data recovery on the database based on the first recovery data, to obtain the database corresponding to the first recovery moment includes: The computer device updates the database to a first database obtained through recovery by using the first full backup snapshot; and the computer device sequentially performs forward recovery on the first database in ascending order of LSNs by using the redo log in the first redo log set, to obtain the database corresponding to the first recovery moment.

In this implementation, the computer device may replace the original database with the database obtained through recovery by using the full backup snapshot whose LSN is less than the first LSN corresponding to the first recovery moment, and then forward recover, by using the redo log, the recovered database to the database corresponding to the first recovery moment. In this way, the database can be recovered to a historical time point.

Optionally, another implementation in which the computer device obtains the first recovery data of the database based on the first LSN includes: The computer device obtains a second full backup snapshot from a full backup of the database based on the first LSN, where an LSN of the second full backup snapshot is greater than the first LSN; and the computer device obtains a second redo log set from an incremental backup of the database based on the first LSN and the LSN of the second full backup snapshot, where the second redo log set includes a redo log whose LSN is between the first LSN and the LSN of the second full backup snapshot. Correspondingly, an implementation process in which the computer device performs data recovery on the database based on the first recovery data, to obtain the database corresponding to the first recovery moment includes: The computer device updates the database to a second database obtained through recovery by using the second full backup snapshot; and the computer device sequentially performs reverse recovery on the second database in descending order of LSNs by using the redo log in the second redo log set, to obtain the database corresponding to the first recovery moment.

In this implementation, the computer device may replace the original database with the database obtained through recovery by using the full backup snapshot whose LSN is greater than the first LSN corresponding to the first recovery moment, and then reversely recover, by using the redo log, the recovered database to the database corresponding to the first recovery moment. In this way, the database can be recovered to a historical time point.

Optionally, another implementation in which the computer device obtains the first recovery data of the database based on the first LSN includes: The computer device obtains a third full backup snapshot from a full backup of the database based on the first LSN, where an LSN of the third full backup snapshot is equal to the first LSN. Correspondingly, an implementation process in which the computer device performs data recovery on the database based on the first recovery data, to obtain the database corresponding to the first recovery moment includes: The computer device updates the database to a third database obtained through recovery by using the third full backup snapshot, and uses the third database as the database corresponding to the first recovery moment.

In this implementation, when a full backup snapshot corresponding to the first recovery moment exists in the full backup of the database, the database corresponding to the first recovery moment may be directly recovered based on the full backup snapshot, so that database recovery efficiency is high.

Optionally, the first recovery instruction is a 1^{st} recovery instruction for the database. Still another implementation in which the computer device obtains the first recovery data of the database based on the first LSN includes: The computer device obtains a third redo log set from an incremental backup of the database based on the first LSN and the LSN corresponding to the first moment, where the third redo log set includes a redo log whose LSN is between the first LSN and the LSN corresponding to the first moment. Correspondingly, an implementation in which the computer device performs data recovery on the database based on the first recovery data, to obtain the database corresponding to the first recovery moment includes: The computer device sequentially performs reverse recovery on the database in descending order of LSNs by using the redo log in the third redo log set, to obtain the database corresponding to the first recovery moment.

In this implementation, the database can be reversely recovered to the database corresponding to the first recovery moment by using only the redo log without using the full backup of the database. Therefore, the database does not need to be fully backed up, and storage resources can be saved.

Optionally, the first recovery instruction is an n^{th} recovery instruction for the database, where n≥2. Still another implementation in which the computer device obtains the first recovery data of the database based on the first LSN includes: The computer device obtains a fourth redo log set from an incremental backup of the database based on the first LSN and the LSN corresponding to the first moment, where the fourth redo log set includes a redo log whose LSN is between a start LSN used by a database corresponding to a previous recovery moment and the LSN corresponding to the first moment, and a redo log whose LSN is between an LSN corresponding to the previous recovery moment and the first LSN. Correspondingly, an implementation process in which the computer device performs data recovery on the database based on the first recovery data to obtain the database corresponding to the first recovery moment includes: The computer device sequentially performs reverse recovery on the database in descending order of LSNs by using the redo log whose LSN is between the start LSN used by the database corresponding to the previous recovery moment and the LSN corresponding to the first moment, to obtain the database corresponding to the previous recovery moment; and the computer device performs, by using the redo log whose LSN is between the first LSN and the LSN corresponding to the previous recovery moment, recovery on the database corresponding to the previous recovery moment, to obtain the database corresponding to the first recovery moment.

In this implementation, the computer device does not need to use the full backup of the database, and can recover the database to any historical time point for a plurality of times by using only the redo log. The database does not need to be fully backed up, and storage resources can be saved.

Optionally, after the computer device performs data recovery on the database based on the first recovery data to obtain the database corresponding to the first recovery moment, in response to receiving, at a second moment, a second recovery instruction for the database, the computer device queries, based on a second recovery moment indicated by the second recovery instruction, the LSN and time association log for a second LSN corresponding to the second recovery moment, where the second recovery moment is earlier than the second moment in time sequence. The computer device obtains second recovery data of the database based on the second LSN. The computer device performs data recovery on the database based on the second recovery data, to obtain a database corresponding to the second recovery moment, where a start LSN used by the database corresponding to the second recovery moment is greater than an LSN corresponding to the second moment.

Optionally, the second recovery moment is later than the first recovery moment in time sequence, and the second recovery moment is earlier than the first moment in time sequence. In other words, in this application, the database can be recovered to any time point after the previous recovery moment.

Optionally, the computer device may further add, to a timeline log, database recovery timeline information corresponding to the first recovery moment, where the database recovery timeline information includes a recovery LSN, a start LSN, and an end LSN, the recovery LSN is the first LSN, the start LSN is the start LSN used by the database corresponding to the first recovery moment, and the end LSN is an LSN corresponding to an end moment of a next recovery instruction.

In this application, the timeline information in the timeline log may be used for data filtering. For example, when a database task is executed, data and/or a redo log of one timeline may be loaded to a memory each time to perform an operation, to avoid confusing database tasks of different timelines.

According to a second aspect, a database recovery apparatus is provided. The apparatus includes a plurality of functional modules, and the plurality of functional modules interact with each other to implement the method in the first aspect and the implementations of the first aspect. The plurality of functional modules may be implemented based on software, hardware, or a combination of software and hardware, and the plurality of functional modules may be randomly combined or divided based on specific implementations.

According to a third aspect, a database recovery apparatus is provided, including a memory and a processor. The memory stores program instructions, and the processor runs the program instructions to perform the method in the first aspect and the implementations of the first aspect.

According to a fourth aspect, a computer-readable storage medium is provided, including program instructions. When the program instructions are run on a computer device, the computer device is enabled to perform the method in the first aspect and the implementations of the first aspect.

According to a fifth aspect, a computer program product is provided. When the computer program product runs on a computer, the computer is enabled to perform the method in the first aspect and the implementations of the first aspect.

### BRIEF DESCRIPTION OF DRAWINGS

FIG. 1 is a diagram of a timeline of database flashback according to an embodiment of this application;
FIG. 2 is a diagram of an application scenario according to an embodiment of this application;
FIG. 3 is a schematic flowchart of an implementation of a database recovery method according to an embodiment of this application;
FIG. 4 is a diagram of a structure of a database recovery apparatus according to an embodiment of this application; and
FIG. 5 is a diagram of an architecture of a database recovery apparatus according to an embodiment of this application.

### DESCRIPTION OF EMBODIMENTS

To make objectives, technical solutions, and advantages of this application clearer, the following further describes implementations of this application in detail with reference to accompanying drawings.

To help a reader understand the solutions of this application, some terms in embodiments of this application are first explained.
1. Transaction: A transaction in a database refers to a series of operations performed as a single logical working unit, which may either be completely performed or not performed at all. Transaction processing ensures that data-oriented resources are not permanently updated unless all operations within a transactional unit are successfully completed. By combining a set of related operations into a unit that either succeeds or fails entirely, error recovery can be simplified and an application can be more reliable. To become a transaction, a logical working unit needs to meet so-called atomicity (atomicity), consistency (consistency), isolation (isolation), and durability (durability) (ACID for short) attribute requirements. Simply speaking, once a transaction is committed, data cannot be lost.
2. Redo log (redo log): A redo log is an important mechanism for ensuring transaction durability. Currently, a database storage engine usually manages storage space in a unit of page. Any addition, deletion, modification, or query operation in the database is finally performed on a complete page. An entire page in a disk is loaded to a buffer pool (buffer pool) in a memory, and then a record that needs to be modified is modified in the buffer pool. A page (namely, a block) of the database is a unit for storing physical records on the disk. A data page in the memory that is inconsistent with that on the disk is referred to as a dirty page. A process in which the dirty page in the memory is written into the disk is referred to as a dirty page flushing process. To improve performance, a relational database commits a transaction after writing data into the redo log and the buffer pool, instead of writing the data into a page (page) file on the disk. In addition, the dirty page flushing process in the database is asynchronous. In other words, after a record that needs to be modified in the buffer pool is modified, the record is not immediately flushed to the disk. When the database crashes (crashes), data in the buffer pool is lost. Therefore, the redo log is introduced to ensure transaction durability. The redo log is used to record operation content in the buffer pool. A redo log is generated every time an operation is completed in the buffer pool. The redo log records which page, how much offset, and what data has been changed. In this way, if the database crashes when a dirty page in the memory is not written into the disk, lost dirty page data in the buffer pool can be recovered by using the redo log. Redo logs can be stored on the disk as a group of files. Because a data structure of the redo log file is simpler than a data structure of a page file, high disk write efficiency can be ensured. In addition, the redo logs are written into the disk in sequence.
3. Log sequence number (LSN): An LSN is an incremental integer that indicates a total quantity of bytes written by a transaction into a redo log. Because the LSN keeps increasing, the LSN can be used as a unique identifier to indicate transactions written at different moments. The LSN is mainly used to recover data when the database crashes. The LSN exists not only in the redo log, but also in a header of each data page. The LSN in the header of the data page is used to record a last modified LSN value of a current page, and is used to compare the LSN value of the redo log during data recovery to determine whether to recover data of the page. In addition, a checkpoint (checkpoint) also has an LSN. In other words, the data page, the redo log, and the checkpoint all have LSNs. The LSN value can link an entire process of a transaction from initiation to recovery.
4. Database full backup: Full backup means that all data in the database is backed up. Database full backup files can be used to recover a complete database. Each full backup is associated with an LSN, and the LSN is used to identify backup data of the full backup.
5. Database incremental backup: Incremental backup refers to backup of incremental data from the last full backup of the database to the next full backup of the database. The incremental data in the database is usually recorded in redo logs.

The database recovery technology is used to recover a database to a previous state (a historical time point). Currently, there are two database recovery mechanisms. One mechanism is a database point-in-time recovery mechanism, which uses the full backup of the database and the incremental backup of the database. A process of database point-in-time recovery is as follows: A user specifies a historical time point to which the database is to be recovered. A full backup set of the database is queried for a full backup of the database that is earlier than the historical time point. The full backup of the database is used to obtain a new database instance through recovery. A redo log is obtained from the incremental backup of the database and the redo log is applied to the new database instance until the historical time point specified by the user for recovery. The database point-in-time recovery mechanism usually uses a forward recovery mode. However, each recovery requires a full copy of a database full backup to create a new database instance, which has high requirements on storage resources. The other mechanism is a database flashback mechanism. The database flashback mechanism is a database recovery mechanism that enables a database to roll back from a current state to a historical state. Compared with the database point-in-time recovery mechanism, the database flashback mechanism does not need to create a new database instance, requires less storage resources, and generally has higher database recovery efficiency.

Currently, a database that provides a database flashback function usually uses a reverse recovery mode. If the database needs to flash back from a time point A to a time point B, the database can execute a recover database (recover database) command to apply incremental data from the time point A to the time point B and reversely recover data in the database from the time point A to the time point B. Database flashback is started in two modes. One startup mode is a read-only mode. In this mode, the database obtained through recovery supports reading data at the time point B but does not support modifying data. The other startup mode is a read/write mode. In this mode, the database obtained through recovery supports both reading data and writing data, but discards backup data after the time point B. Correspondingly, the database cannot flash back to any time point between the time point B and the time point A. Therefore, an application limitation of the current database flashback mechanism is high.

For example, a common database flashback architecture includes a recover writer (recover writer, RVWR) process, a log writer (log writer, LGWR) process, a flashback database log (flashback database log), a redo log, and a flashback recovery area (flashback recovery area). Once the database flashback function is enabled, the RVWR process and the LGWR process are started. The RVWR process writes the flashback database log into the flashback recovery area. The flashback database log includes a pre-image of a data block. The LGWR process is responsible for writing the redo log. The redo log includes a pre-image and a post-image of the data block. The pre-image of the data block refers to content of the data block before the change, and the post-image of the data block refers to content of the data block after the change.

For example, it is assumed that a default value of a column C1 in a T table in a database is null, and a structured query language (structured query language, SQL) command is separately executed on the column C1 in the T table at a plurality of time points. In this case, flashback database logs and redo logs shown in Table 1 may be obtained.

**Table 1**

| Time point | SQL that acts on Column C1 of Table T | Flashback database log | Redo log |
|---|---|---|---|
| 09:00:00 | Update T set C1=1; | Value before change: null | Value before change: null, and value after change: 1 |
| 09:10:00 | Update T set C1=2; | Value before change: 1 | Value before change: 1, and value after change: 2 |
| 09:15:00 | Update T set C1=3; | Value before change: 2 | Value before change: 2, and value after change: 3 |
| 09:20:00 | Update T set C1=4; | Value before change: 3 | Value before change: 3, and value after change: 4 |

When database flashback is started, records in the flashback database logs are obtained from the tail to the head in sequence and applied to the database. Refer to Table 1. For example, at a current time 09:20:00, a value of the C1 column in the T table is 4. When the database needs to flash back to a time point 09:10:00, where a value of the C1 column in the T table is 2, the log is applied from the tail. First, the value of C1=3 is retrieved to overwrite C1=4, and then the value of C1=2 is retrieved to overwrite C1=3. If the conditions are met, applying of the flashback database logs is stopped.

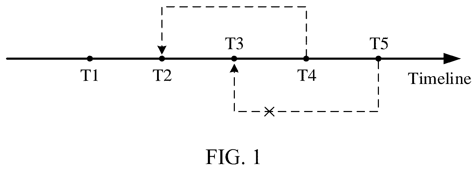

Currently, if database flashback is performed in the read/write mode, historical data generated after the recovery moment is discarded. As a result, the database flashback does not support flashback to any time point for a plurality of times. For example, FIG. 1 shows a timeline of database flashback, where an arrow direction indicates a time sequence direction, that is, T1<T2<T3<T4<T5. As shown in FIG. 1, after the database flashes back from the time point T4 to the time point T2 in the read/write mode, redo logs generated between the time point T2 and the time point T4 are discarded. Therefore, the database cannot flash back from the time point T5 to the time point T3 between the time point T2 and the time point T4. A reason for this defect is as follows. LSNs of redo logs increase in ascending order by default and cannot be repeated. An LSN of a redo log generated at a time point T is recorded as an LSN (T). When the database flashes back from the time point T4 to the time point T2, an LSN of a redo log generated from the time point T4 starts from an LSN (T2)+1, which conflicts with LSNs of the redo logs generated between the time point T2 and the time point T4. Therefore, the redo logs generated after T2 need to be discarded after the flashback. In other words, the LSN of the redo log generated after the database flashback in the read/write mode conflicts with the LSNs of the redo logs generated after the flashback time point. As a result, the database flashback cannot be performed at any time point for a plurality of times.

In view of this, this application provides a technical solution. The technical solution can implement flashback of a database at any time point for a plurality of times. In other words, the database recovery method provided in embodiments of this application may be used to implement database flashback. An LSN corresponding to each moment in the database is recorded in an LSN and time association log. When a recovery instruction for the current database is received, the LSN and time association log may be queried, based on a recovery moment indicated by the recovery instruction, for an LSN corresponding to the recovery moment. Then, corresponding recovery data is obtained based on the LSN corresponding to the recovery moment. The recovery data may include a full backup of the database and/or an incremental backup of the database. Further, data recovery is performed on the current database based on the recovery data, to obtain a database corresponding to the recovery moment. Then, a start LSN used by the database corresponding to the recovery moment is greater than an LSN corresponding to a current moment. In other words, in this application, after the current database is rolled back to a historical moment according to the recovery instruction for the current database, an LSN corresponding to the historical moment is no longer used as a start point, but the LSN corresponding to the current moment is used as the start point. Further, an LSN greater than the LSN corresponding to the current moment is used to identify a redo log generated after the database is rolled back to the historical moment, and an LSN jump mechanism is used to ensure that an LSN used after the database is recovered does not conflict with an LSN used before the database is recovered. In this way, after the database is recovered, a redo log generated after the recovery moment does not need to be discarded, so that the database supports recovery at any time point for a plurality of times. This improves flexibility of database recovery.

The following describes the technical solutions of this application in detail from a plurality of perspectives such as an application scenario, a method procedure, a virtual apparatus, and a hardware apparatus.

The following describes an application scenario in embodiments of this application by using an example.

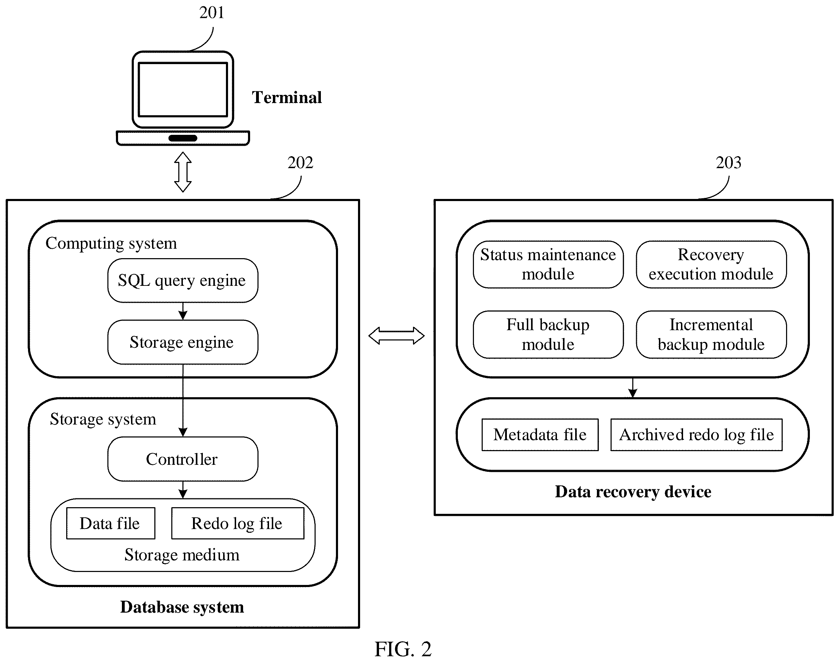

The database recovery method provided in embodiments of this application may be applied to a single-node database or a distributed database. For example, FIG. 2 is a diagram of an application scenario according to an embodiment of this application. As shown in FIG. 2, the application scenario includes a terminal 201, a database system 202, and a data recovery device 203. The terminal 201 is communicatively connected to the database system 202. The database system 202 is communicatively connected to the data recovery device 203. The database system shown in FIG. 2 is a deployment form of a single-node database.

A user may access the database system 202 via the terminal 201. The database system 202 includes a computing system and a storage system. The storage system is configured to store data, and the computing system is configured to invoke the storage system to complete execution of a database task. The storage system includes a controller and a storage medium. The storage medium is configured to store data. For example, as shown in FIG. 2, the data stored in the storage medium includes but is not limited to a data file and a redo log file. The controller is configured to read data from the storage medium or write data into the storage medium, to cooperate with the computing system to complete execution of a database task. That the computing system invokes the storage system may be understood as that the computing system performs a series of operations on the storage system, including but not limited to a read operation, a write operation, a rename operation, a create operation, or a delete operation. The read operation is used to read data from the storage system. The write operation is used to write data into the storage system in an overwrite manner. The rename operation is used to rename data or a file in the storage system. The create operation is used to create a file or a storage volume in the storage system to write new data. The delete operation is used to delete original data in the storage system. For example, as shown in FIG. 2, the computing system includes an SQL query engine and a storage engine. The terminal 201 may write data via the SQL query engine, and the storage engine may finally write data into the data file and the redo log file in the storage medium via the controller in the storage system. Database recovery in embodiments of this application refers to recovery of the data file in the storage medium.

The data recovery device 203 is responsible for database recovery. The data recovery device 203 and the database system 202 may be deployed on two independent devices, or may be integrated and deployed on a same device. Optionally, as shown in FIG. 2, the data recovery device 203 may include a plurality of functional modules, including but not limited to a full backup module, an incremental backup module, a status maintenance module, and a recovery execution module. Functional modules in the data recovery device 203 may be added or deleted based on an actual requirement. For example, the data recovery device 203 may not include the full backup module. A quantity and types of the functional modules included in the data recovery device 203 are not limited in this embodiment of this application. Still refer to FIG. 2. The data recovery device 203 further maintains an archived redo log file and a metadata file. The archived redo log file is used to store a backup of the redo log file in the database system 202, that is, the archived redo log file is used to store an incremental backup of the database. The metadata file is used to store a backup of the data file in the database system 202, that is, the metadata file is used to store a full backup of the database. The archived redo file and the metadata file are used as recovery data for the data recovery device to recover the database.

The full backup module is responsible for a full backup of the data file. A file system snapshot backup mode can be used to improve efficiency of the full backup and recovery. In this way, snapshot backup or recovery can be completed in seconds. Each full backup snapshot is associated with an LSN, and the LSN may uniquely identify a corresponding full backup snapshot. The full backup module may store a full backup log in the metadata file, and a log structure is "full backup snapshot, LSN". The full backup module is configured to: create a full backup snapshot of the data file in the database system 202, generate a full backup log, and write the full backup log into the metadata file.

The incremental backup module backs up the redo log file. The incremental backup module is configured to continuously back up the redo log file in the database system 202, and store the redo log file in the archived redo log file in the data recovery device 203.

The status maintenance module maintains a recovery status of the database. The status maintenance module may be configured to: obtain a current LSN and a current time from the database system 202 every second, and write an LSN and time association log into the metadata file, where a log structure is "time, LSN". The status maintenance module may be further configured to periodically (for example, every 10 minutes) invoke the full backup module to create the full backup snapshot of the data file in the database system 202. The status maintenance module may be further configured to periodically clear unnecessary backup data in the metadata file and the archived redo log file, for example, a full backup snapshot and a redo log that are not in a recovery window. The recovery window refers to an earliest recoverable time, and the recovery window may be set and modified by the user. An implementation of clearing the backup data by the status maintenance module is as follows. An earliest recoverable time is first determined, the LSN and time association log is queried for an LSN corresponding to the earliest time, and then a redo log whose LSN is less than the LSN corresponding to the earliest time is deleted from the archived redo log file. In addition, the full backup log is searched for a full backup snapshot whose associated LSN is less than the LSN corresponding to the earliest time, only one snapshot is retained, and redundant snapshots are deleted.

The recovery execution module executes database recovery. The recovery execution module is configured to query, based on a specified recovery moment, the LSN and time association log for an LSN corresponding to the recovery moment, then obtain corresponding recovery data from the metadata file and/or the archived redo log file based on the LSN corresponding to the recovery moment, and use the recovery data to recover the database. The recovery execution module may further store a timeline log in the metadata file, where a log structure is "number, recovery LSN, start LSN, end LSN". Each time the recovery execution module performs database recovery, corresponding database recovery timeline information may be added to the timeline log. The recovery LSN is an LSN corresponding to the recovery moment, the start LSN is a start LSN that starts to be used from the recovery moment, and the end LSN is an LSN corresponding to a trigger moment of next database recovery. For example, an LSN of a redo log generated at a time point T is denoted as an LSN (T). Table 2 shows a timeline log.

**Table 2**

| Number | Recovery LSN | Start LSN | End LSN |
|---|---|---|---|
| Timeline 1 | Null | 0 | LSN (T4) |
| Timeline 2 | LSN (T2) | LSN (T4)+1 | LSN (T5) |
| Timeline 3 | LSN (T3) | LSN (T5)+1 | / (Unknown) |

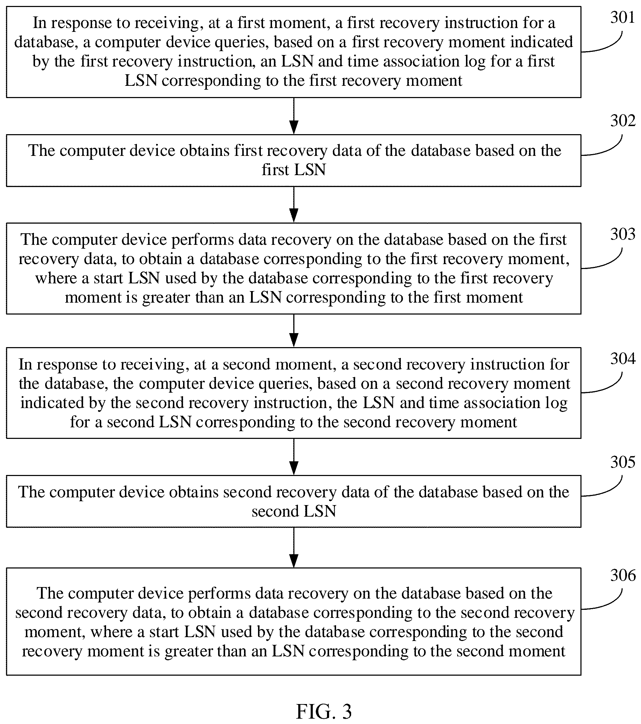

Refer to Table 2. When the database is started for the first time, a first timeline is created. The first timeline is numbered as the timeline 1, and a start LSN of the timeline 1 is 0. After a recovery instruction for recovering to a time point T2 is received at a time point T4, the LSN (T4) is used as an end LSN of the timeline 1, and a second timeline numbered as the timeline 2 is created. A recovery LSN of the timeline 2 is the LSN (T2), and a start LSN is the LSN (T4)+1. After a recovery instruction for recovering to a time point T3 is received at a time point T6, the LSN (T5) is used as an end LSN of the timeline 2, and a third timeline numbered as the timeline 3 is created. A recovery LSN of the timeline 3 is the LSN (T3), and a start LSN is the LSN (T5)+1. The timeline in Table 2 is the timeline shown in FIG. 1. In this way, the LSNs of the redo logs generated by the database do not conflict with each other in the entire timeline, and the database can be recovered to any time point for a plurality of times. For a specific function implementation of the recovery execution module, refer to the following method embodiment shown in FIG. 3.

The following describes a method procedure in embodiments of this application by using an example.

For example, FIG. 3 is a schematic flowchart of an implementation of a database recovery method according to an embodiment of this application. The method may be applied to a computer device. The computer device may be the data recovery device 203 or the recovery execution module in the data recovery device 203 in the application scenario shown in FIG. 2. As shown in FIG. 3, the method includes but is not limited to the following step 301 to step 303. For example, the method may further include the following step 304 to step 306.

Step 301: In response to receiving, at a first moment, a first recovery instruction for a database, the computer device queries, based on a first recovery moment indicated by the first recovery instruction, an LSN and time association log for a first LSN corresponding to the first recovery moment.

The first recovery moment is earlier than the first moment in time sequence. In other words, the first recovery instruction is used to trigger the database to be recovered from a current state to a historical state. The LSN and time association log is used to record LSNs respectively corresponding to a plurality of moments in the database. For example, a current LSN and a current time are obtained from the database every second, and the current LSN and the current time are associated and stored in the LSN and time association log. The current time herein refers to a natural time. In this embodiment of this application, the LSN in the database monotonically increases in natural time sequence. In other words, the LSN used in the database increases with time. For example, an LSN of a redo log generated at a current moment is 1, and an LSN of a redo log generated at a next moment is 2. A correspondence that is between a moment and an LSN and that is stored in the LSN and time association log may be that one moment corresponds to one LSN; or when no new LSN is used in the database at a plurality of consecutive moments, that is, the LSN remains unchanged, one time period corresponds to one LSN. For example, Table 3 shows an LSN and time association log.

**Table 3**

| Time | LSN |
|---|---|
| 08:00:00 | 0 |
| 08:00:01 | 1 |
| 08:00:02 to 08:00:05 | 2 |
| 08:00:06 | 3 |
| ... | ... |

As shown in Table 3, an LSN corresponding to the moment 08:00:00 is 0. An LSN corresponding to the moment 08:00:01 is 1. LSNs corresponding to the time period from 08:00:02 to 08:00:05, to be specific, 08:00:02, 08:00:03, 08:00:04 and 08:00:05 are 2, indicating that no new LSN is used in the database at the three time points 08:00:03, 08:00:04, and 08:00:05, and that data in the database does not change. An LSN corresponding to the moment 08:00:06 is 3.

Step 302: The computer device obtains first recovery data of the database based on the first LSN.

Optionally, the first recovery data includes full data and/or incremental data. In this embodiment of this application, there are a plurality of implementations in which the computer device performs database recovery. With reference to different implementations of database recovery, there are also a plurality of implementations in which the computer device obtains the first recovery data of the database based on the first LSN. For details, refer to the following four implementations.

In a first implementation, the computer device obtains a first full backup snapshot from a full backup of the database based on the first LSN, where an LSN of the first full backup snapshot is less than the first LSN. The computer device obtains a first redo log set from an incremental backup of the database based on the LSN of the first full backup snapshot and the first LSN. The first redo log set includes a redo log whose LSN is between the LSN of the first full backup snapshot and the first LSN. In other words, the redo log in the first redo log set meets: The LSN of the redo log is greater than the LSN of the first full backup snapshot, and is less than or equal to the first LSN.

In this embodiment of this application, the LSN used by the database monotonically increases in natural time sequence. Therefore, the first redo log set obtained by the computer device is incremental data of the database at the first recovery moment relative to the first full backup snapshot.

Optionally, the first full backup snapshot is a full backup snapshot whose LSN is less than the first LSN and closest to the first LSN in the full backup of the database. In this way, obtained incremental data of the database at the first recovery moment relative to the first full backup snapshot can be reduced as much as possible, to improve database recovery efficiency.

In a second implementation, the computer device obtains a second full backup snapshot from a full backup of the database based on the first LSN, where an LSN of the second full backup snapshot is greater than the first LSN. The computer device obtains a second redo log set from an incremental backup of the database based on the first LSN and the LSN of the second full backup snapshot. The second redo log set includes a redo log whose LSN is between the first LSN and the LSN of the second full backup snapshot. In other words, the redo log in the second redo log set meets: The LSN of the redo log is greater than the first LSN and less than or equal to the LSN of the second full backup snapshot.

In this embodiment of this application, the LSN used by the database monotonically increases in natural time sequence. Therefore, the second redo log set obtained by the computer device is incremental data of the second full backup snapshot relative to the database at the first recovery moment.

Optionally, the second full backup snapshot is a full backup snapshot whose LSN is greater than the first LSN and closest to the first LSN in the full backup of the database. In this way, incremental data of the obtained second full backup snapshot relative to the database at the first recovery moment can be reduced as much as possible, to improve database recovery efficiency.

In a third implementation, the computer device obtains a third full backup snapshot from a full backup of the database based on the first LSN, where an LSN of the third full backup snapshot is equal to the first LSN.

In a first possible case of a fourth implementation, the first recovery instruction is a 1^{st} recovery instruction for the database. In this case, the computer device obtains a third redo log set from an incremental backup of the database based on the first LSN and an LSN corresponding to the first moment. The third redo log set includes a redo log whose LSN is between the first LSN and the LSN corresponding to the first moment. In other words, the redo log in the first redo log set meets: The LSN of the redo log is greater than the first LSN, and is less than or equal to the LSN corresponding to the first moment.

In this embodiment of this application, the LSN used by the database monotonically increases in natural time sequence. Therefore, the redo log in the third redo log set obtained by the computer device is incremental data of the database at the first moment relative to the first recovery moment.

In a second possible case of the fourth implementation, the first recovery instruction is an n^{th} recovery instruction for the database, where n≥2. In this case, the computer device obtains a fourth redo log set from an incremental backup of the database based on the first LSN and an LSN corresponding to the first moment. The fourth redo log set includes a redo log whose LSN is between a start LSN used by a database corresponding to a previous recovery moment and the LSN corresponding to the first moment, and a redo log whose LSN is between an LSN corresponding to the previous recovery moment and the first LSN. The LSN of the redo log is between the start LSN used by the database corresponding to the previous recovery moment and the LSN corresponding to the first moment. In other words, the LSN of the redo log is greater than the start LSN used by the database corresponding to the previous recovery moment, and is less than or equal to the LSN corresponding to the first moment.

In this embodiment of this application, the LSN used by the database monotonically increases in natural time sequence. Therefore, the redo log in the fourth redo log set obtained by the computer device and whose LSN is between the start LSN used by the database corresponding to the previous recovery moment and the LSN corresponding to the first moment is incremental data of the database at the first moment relative to the previous recovery moment.

In the second possible case, if the first recovery moment is later than the previous recovery moment in time sequence, the fourth redo log set includes the redo log whose LSN is between the LSN corresponding to the previous recovery moment and the first LSN, in other words, the LSN of the redo log is greater than the LSN corresponding to the previous recovery moment, and is less than or equal to the first LSN. If the first recovery moment is earlier than the previous recovery moment in time sequence, the fourth redo log set includes the redo log whose LSN is between the LSN corresponding to the previous recovery moment and the first LSN, in other words, the LSN of the redo log is greater than the first LSN, and is less than or equal to the LSN corresponding to the previous recovery moment.

Step 303: The computer device performs data recovery on the database based on the first recovery data, to obtain a database corresponding to the first recovery moment, and then a start LSN used by the database corresponding to the first recovery moment is greater than the LSN corresponding to the first moment.

The start LSN used by the database corresponding to the first recovery moment is an LSN that starts to be used after the database is recovered to a historical state corresponding to the first recovery moment. For example, if the LSN corresponding to the first moment is 10, and an LSN corresponding to the first recovery moment is 5, the LSN that starts to be used after the database is recovered to the historical state corresponding to the first recovery moment is greater than 10. In other words, after the computer device recovers the database to the historical state corresponding to the first recovery moment, in response to receiving an operation instruction for the database corresponding to the first recovery moment, the computer device executes the operation instruction, and generates a redo log corresponding to the operation instruction. An LSN of the redo log is greater than the LSN corresponding to the first moment.

Optionally, the start LSN used by the database corresponding to the first recovery moment is a next LSN of the LSN corresponding to the first moment. For example, if the LSN corresponding to the first moment is 10, the LSN that starts to be used after the database is recovered to the historical state corresponding to the first recovery moment is 11.

Before performing data recovery on the database based on the first recovery data, the computer device first disables the database.

With reference to the first implementation in step 302, an implementation process of step 303 includes: The computer device updates the database to a first database obtained through recovery by using the first full backup snapshot. The computer device sequentially performs forward recovery on the first database in ascending order of LSNs by using the redo log in the first redo log set, to obtain the database corresponding to the first recovery moment.

For example, as shown in the example in Table 2, after the computer device receives, at the time point T4, a recovery instruction for recovering to the time point T2, assuming that a full backup snapshot whose LSN is the LSN (T1) is obtained from the full backup, the computer device may recover the database through the full backup snapshot. Then, redo logs from the LSN (T1) to the LSN (T2) are sequentially applied to the recovered database, so that the database is forward recovered from the time point T1 to the time point T2. Further, after the computer device receives, at the time point T5, a recovery instruction for recovering to the time point T3, assuming that a full backup snapshot whose LSN is the LSN (T2) is obtained from the full backup, the computer device may recover the database through the full backup snapshot. Then, redo logs from the LSN (T2) to the LSN (T3) are sequentially applied to the recovered database, so that the database is forward recovered from the time point T2 to the time point T3.

In this implementation, the computer device may replace the original database with a database obtained through recovery by using a full backup snapshot whose LSN is less than the first LSN corresponding to the first recovery moment, and then forward recover, by using the redo log, the recovered database to the database corresponding to the first recovery moment. In this way, the database can be recovered to a historical time point.

With reference to the second implementation in step 302, an implementation process of step 303 includes: The computer device updates the database to a second database obtained through recovery by using the second full backup snapshot. The computer device sequentially performs reverse recovery on the second database in descending order of LSNs by using the redo log in the second redo log set, to obtain the database corresponding to the first recovery moment.

For example, as shown in the example in Table 2, after the computer device receives, at the time point T4, a recovery instruction for recovering to the time point T2, assuming that a full backup snapshot whose LSN is the LSN (T3) is obtained from the full backup, the computer device may recover the database through the full backup snapshot. Then, redo logs from the LSN (T3) to the LSN (T2) are sequentially used to replay the recovered database, so that the database is reversely recovered from the time point T3 to the time point T2. Further, after the computer device receives, at the time point T5, a recovery instruction for recovering to the time point T3, assuming that a full backup snapshot whose LSN is the LSN (T4) is obtained from the full backup, the computer device may recover the database through the full backup snapshot. Then, redo logs from the LSN (T4) to the LSN (T3) are sequentially used to replay the recovered database, so that the database is reversely recovered from the time point T4 to the time point T3.

In this implementation, the computer device may replace the original database with a database obtained through recovery by using a full backup snapshot whose LSN is greater than the first LSN corresponding to the first recovery moment, and then reversely recover, by using the redo log, the recovered database to the database corresponding to the first recovery moment. In this way, the database can be recovered to a historical time point.

With reference to the third implementation in step 302, an implementation process of step 303 includes: The computer device updates the database to a third database obtained through recovery by using the third full backup snapshot, and uses the third database as the database corresponding to the first recovery moment.

In this implementation, when a full backup snapshot corresponding to the first recovery moment exists in the full backup of the database, the database corresponding to the first recovery moment may be directly recovered based on the full backup snapshot, so that database recovery efficiency is high.

With reference to the first possible case of the fourth implementation in step 302, an implementation process of step 303 includes: The computer device sequentially performs reverse recovery on the database in descending order of LSNs by using the redo log in the third redo log set, to obtain the database corresponding to the first recovery moment.

For example, as shown in the example in Table 2, after receiving a recovery instruction for recovering to the time point T2 at the time point T4, the computer device sequentially replays the database at the time point T4 by using redo logs from the LSN (T4) to the LSN (T2), so that the database is reversely recovered from the time point T4 to the time point T2.

In this implementation, the database can be reversely recovered to the database corresponding to the first recovery moment by using only the redo log without using the full backup of the database. Therefore, the database does not need to be fully backed up, and storage resources can be saved.

With reference to the second possible case of the fourth implementation in step 302, an implementation process of step 303 includes: The computer device sequentially performs reverse recovery on the database in descending order of the LSNs by using the redo log whose LSN is between the start LSN used by the database corresponding to the previous recovery moment and the LSN corresponding to the first moment, to obtain the database corresponding to the previous recovery moment. The computer device performs, by using the redo log whose LSN is between the LSN corresponding to the previous recovery moment and the first LSN, recovery on the database corresponding to the previous recovery moment, to obtain the database corresponding to the first recovery moment.

If the first recovery moment is later than the previous recovery moment in time sequence, an implementation in which the computer device performs, by using the redo log whose LSN is between the LSN corresponding to the previous recovery moment and the first LSN, recovery on the database corresponding to the previous recovery moment may be as follows: The computer device sequentially performs, in ascending order of the LSNs by using the redo log whose LSN is between the LSN corresponding to the previous recovery moment and the first LSN, forward recovery on the database corresponding to the previous recovery moment. For example, as shown in the example in Table 2, after the computer device receives, at the time point T5, a recovery instruction for recovering to the time point T3, the computer device first uses redo logs from the LSN (T5) to the LSN (T4)+1 to replay a database at the time point T5 in sequence to obtain a database at the time point T2, and then sequentially applies redo logs from the LSN (T2) to the LSN (T3) to the database at the time point T2, so that the database is forward recovered from the time point T2 to the time point T3.

If the first recovery moment is earlier than the previous recovery moment in time sequence, an implementation in which the computer device performs, by using the redo log whose LSN is between the LSN corresponding to the previous recovery moment and the first LSN, recovery on the database corresponding to the previous recovery moment may be as follows: The computer device sequentially performs, in descending order of the LSNs by using the redo log whose LSN is between the LSN corresponding to the previous recovery moment and the first LSN, reverse recovery on the database corresponding to the previous recovery moment. For example, as shown in the example in Table 2, after the computer device receives, at the time point T5, a recovery instruction for recovering to the time point T1, the computer device first uses redo logs from the LSN (T5) to the LSN (T4)+1 to replay a database at the time point T5 in sequence to obtain a database at the time point T2, and then uses redo logs from the LSN (T2) to the LSN (T1) to sequentially replay the database at the time point T2 to obtain the database at the time point T1.

In this implementation, the computer device does not need to use the full backup of the database, and can recover the database to any historical time point for a plurality of times by using only the redo log. The database does not need to be fully backed up, and storage resources can be saved.

Optionally, after receiving the first recovery instruction for the database at the first moment, the computer device may further add, to a timeline log, database recovery timeline information corresponding to the first recovery moment. The database recovery timeline information includes a recovery LSN, a start LSN, and an end LSN. The recovery LSN in the database recovery timeline information corresponding to the first recovery moment is the first LSN, the start LSN is the start LSN used by the database corresponding to the first recovery moment, and the end LSN is an LSN corresponding to an end moment of a next recovery instruction. If the computer device receives a recovery instruction for the database again at a second moment, the end LSN in the database recovery timeline information corresponding to the first recovery moment is an LSN corresponding to the second moment. Refer to the example in Table 2. If the first moment is the time point T4, and the first recovery moment is the time point T2, the database recovery timeline information corresponding to the first recovery moment may be timeline information numbered as the timeline 2 in Table 2. If the first moment is the time point T5, and the first recovery moment is the time point T3, the database recovery timeline information corresponding to the first recovery moment may be timeline information numbered as the timeline 3 in Table 2.

In this embodiment of this application, the timeline information in the timeline log may be used for data filtering. For example, when a database task is executed, data and/or a redo log of one timeline may be loaded to a memory each time to perform an operation, to avoid confusing database tasks of different timelines.

Optionally, after performing step 301 to step 303, the computer device may further continue to perform the following step 304 to step 306.

Step 304: In response to receiving, at the second moment, a second recovery instruction for the database, the computer device queries, based on a second recovery moment indicated by the second recovery instruction, the LSN and time association log for a second LSN corresponding to the second recovery moment.

The second recovery moment is earlier than the second moment in time sequence. In other words, the second recovery instruction is used to trigger the database to be recovered from a current state to a historical state. The second recovery instruction is a next recovery instruction of the first recovery instruction.

Optionally, the second recovery moment is later than the first recovery moment in time sequence, and the second recovery moment is earlier than the first moment in time sequence. In this embodiment of this application, the database can be recovered to any time point after the previous recovery moment.

Step 305: The computer device obtains second recovery data of the database based on the second LSN.

Step 306: The computer device performs data recovery on the database based on the second recovery data, to obtain a database corresponding to the second recovery moment, where a start LSN used by the database corresponding to the second recovery moment is greater than the LSN corresponding to the second moment.

For an implementation process of step 304 to step 306, refer to the implementation process of step 301 to step 303. Details are not described herein again in this embodiment of this application.

In the database recovery method provided in this embodiment of this application, an LSN corresponding to each moment in the database is recorded in the LSN and time association log. When receiving the recovery instruction for the current database, the computer device may query, based on the recovery moment indicated by the recovery instruction, the LSN and time association log for the LSN corresponding to the recovery moment, and then obtain the corresponding recovery data based on the LSN corresponding to the recovery moment. The recovery data may include the full backup of the database and/or the incremental backup of the database. Further, data recovery is performed on the current database based on the recovery data, to obtain the database corresponding to the recovery moment. Then, the start LSN used by the database corresponding to the recovery moment is greater than the LSN corresponding to the current moment. In other words, in this embodiment of this application, after the current database is rolled back to a historical moment according to the recovery instruction for the current database, the computer device no longer uses an LSN corresponding to the historical moment as a start point, but uses the LSN corresponding to the current moment as the start point. Further, an LSN greater than the LSN corresponding to the current moment is used to identify a redo log generated after the database is rolled back to the historical moment, and an LSN jump mechanism is used to ensure that an LSN used after the database is recovered does not conflict with an LSN used before the database is recovered. In this way, after the database is recovered, a redo log generated after the recovery moment does not need to be discarded, so that the database supports recovery at any time point for a plurality of times. This improves flexibility of database recovery.

It should be noted that a sequence of the steps of the database recovery method provided in this embodiment of this application may be properly adjusted, or the steps may be correspondingly added or deleted based on a situation. Any method variation readily figured out by any person skilled in the art within the technical scope disclosed in this application shall fall within the protection scope of this application.

The following describes a virtual apparatus in embodiments of this application by using an example.

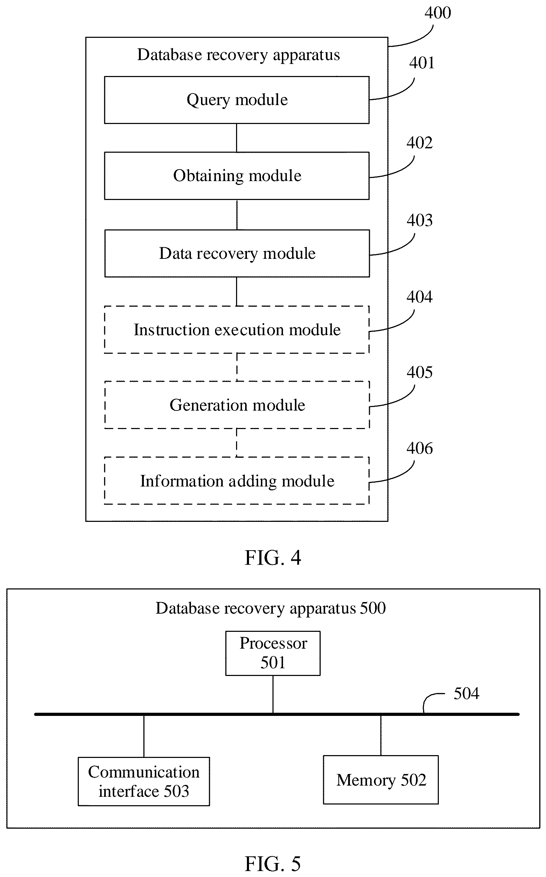

For example, FIG. 4 is a diagram of a structure of a database recovery apparatus according to an embodiment of this application. As shown in FIG. 4, the database recovery apparatus 400 includes but is not limited to a query module 401, an obtaining module 402, and a data recovery module 403. Optionally, still as shown in FIG. 4, the database recovery apparatus 400 further includes one or more of an instruction execution module 404, a generation module 405, or an information adding module 406.

The query module 401 is configured to: in response to receiving, at a first moment, a first recovery instruction for a database, query, based on a first recovery moment indicated by the first recovery instruction, a log sequence number LSN and time association log for a first LSN corresponding to the first recovery moment, where the LSN and time association log is used to record LSNs respectively corresponding to a plurality of moments in the database, and the first recovery moment is earlier than the first moment in time sequence. Herein, the query module 401 is specifically configured to perform step 301.

The obtaining module 402 is configured to obtain first recovery data of the database based on the first LSN. Herein, the obtaining module 402 is specifically configured to perform step 302.

The data recovery module 403 is configured to perform data recovery on the database based on the first recovery data, to obtain a database corresponding to the first recovery moment, where a start LSN used by the database corresponding to the first recovery moment is greater than an LSN corresponding to the first moment. Herein, the data recovery module 403 is specifically configured to perform step 303.

Optionally, the start LSN used by the database corresponding to the first recovery moment is a next LSN of the LSN corresponding to the first moment.

Optionally, the instruction execution module 404 is configured to: after data recovery is performed on the database based on the first recovery data to obtain the database corresponding to the first recovery moment, execute, in response to receiving an operation instruction for the database corresponding to the first recovery moment, the operation instruction. The generation module 405 is configured to generate a redo log corresponding to the operation instruction, where an LSN of the redo log is greater than the LSN corresponding to the first moment.

Optional, the obtaining module 402 is specifically configured to: obtain a first full backup snapshot from a full backup of the database based on the first LSN, where an LSN of the first full backup snapshot is less than the first LSN; and obtain a first redo log set from an incremental backup of the database based on the LSN of the first full backup snapshot and the first LSN, where the first redo log set includes a redo log whose LSN is between the LSN of the first full backup snapshot and the first LSN. The data recovery module 403 is specifically configured to: update the database to a first database obtained through recovery by using the first full backup snapshot; and sequentially perform forward recovery on the first database in ascending order of LSNs by using the redo log in the first redo log set, to obtain the database corresponding to the first recovery moment.

Alternatively, the obtaining module 402 is specifically configured to: obtain a second full backup snapshot from a full backup of the database based on the first LSN, where an LSN of the second full backup snapshot is greater than the first LSN; and obtain a second redo log set from an incremental backup of the database based on the first LSN and the LSN of the second full backup snapshot, where the second redo log set includes a redo log whose LSN is between the first LSN and the LSN of the second full backup snapshot. The data recovery module 403 is specifically configured to: update the database to a second database obtained through recovery by using the second full backup snapshot; and sequentially perform reverse recovery on the second database in descending order of LSNs by using the redo log in the second redo log set, to obtain the database corresponding to the first recovery moment.

Alternatively, the obtaining module 402 is specifically configured to obtain a third full backup snapshot from a full backup of the database based on the first LSN, where an LSN of the third full backup snapshot is equal to the first LSN. The data recovery module 403 is specifically configured to: update the database to a third database obtained through recovery by using the third full backup snapshot, and use the third database as the database corresponding to the first recovery moment.

Alternatively, the first recovery instruction is a 1^{st} recovery instruction for the database. The obtaining module 402 is specifically configured to obtain a third redo log set from an incremental backup of the database based on the first LSN and the LSN corresponding to the first moment, where the third redo log set includes a redo log whose LSN is between the first LSN and the LSN corresponding to the first moment. The data recovery module 403 is specifically configured to sequentially perform reverse recovery on the database in descending order of LSNs by using the redo log in the third redo log set, to obtain the database corresponding to the first recovery moment.

Alternatively, the first recovery instruction is an n^{th} recovery instruction for the database, where n≥2. The obtaining module 402 is specifically configured to obtain a fourth redo log set from an incremental backup of the database based on the first LSN and the LSN corresponding to the first moment, where the fourth redo log set includes a redo log whose LSN is between a start LSN used by a database corresponding to a previous recovery moment and the LSN corresponding to the first moment, and a redo log whose LSN is between an LSN corresponding to the previous recovery moment and the first LSN. The data recovery module 403 is specifically configured to: sequentially perform reverse recovery on the database in descending order of the LSNs by using the redo log whose LSN is between the start LSN used by the database corresponding to the previous recovery moment and the LSN corresponding to the first moment, to obtain the database corresponding to the previous recovery moment; and perform recovery on the database corresponding to the previous recovery moment by using the redo log whose LSN is between the LSN corresponding to the previous recovery moment and the first LSN, to obtain the database corresponding to the first recovery moment.

Optionally, the query module 401 is further configured to: after data recovery is performed on the database based on the first recovery data to obtain the database corresponding to the first recovery moment, in response to receiving, at a second moment, a second recovery instruction for the database, query, based on a second recovery moment indicated by the second recovery instruction, the LSN and time association log for a second LSN corresponding to the second recovery moment, where the second recovery moment is earlier than the second moment in time sequence. The obtaining module 402 is further configured to obtain second recovery data of the database based on the second LSN. The data recovery module 403 is further configured to perform data recovery on the database based on the second recovery data, to obtain a database corresponding to the second recovery moment, where a start LSN used by the database corresponding to the second recovery moment is greater than an LSN corresponding to the second moment. Herein, the query module 401 is specifically configured to perform step 304. The obtaining module 402 is specifically configured to perform step 305. The data recovery module 403 is specifically configured to perform step 306.

Optionally, the second recovery moment is later than the first recovery moment in time sequence, and the second recovery moment is earlier than the first moment in time sequence.

Optionally, the information adding module 406 is configured to add, to a timeline log, database recovery timeline information corresponding to the first recovery moment, where the database recovery timeline information includes a recovery LSN, a start LSN, and an end LSN, the recovery LSN is the first LSN, the start LSN is the start LSN used by the database corresponding to the first recovery moment, and the end LSN is an LSN corresponding to an end moment of a next recovery instruction.

For the apparatus in the foregoing embodiment, specific manners of executing operations by each module are described in detail in embodiments related to the method, and details are not described herein.

The following describes a hardware apparatus in embodiments of this application by using an example.

An embodiment of this application provides a database recovery apparatus. The database recovery apparatus may be a computer device. FIG. 5 provides an example of a diagram of a possible architecture of a database recovery apparatus. As shown in FIG. 5, the database recovery apparatus 500 may include a processor 501, a memory 502, a communication interface 503, and a bus 504. In the database recovery apparatus, there may be one or more processors 501. FIG. 5 shows only one of the processors 501. Optionally, the processor 501 may be a central processing unit (central processing unit, CPU). If the database recovery apparatus has a plurality of processors 501, types of the plurality of processors 501 may be different or may be the same. Optionally, the plurality of processors of the database recovery apparatus may be integrated into a multi-core processor.

The memory 502 is configured to store computer instructions and data. The memory 502 may store computer instructions and data that are required for implementing the database recovery method provided in this application. The memory 502 may be any one or any combination of the following storage media: a non-volatile memory (for example, a read-only memory (read-only memory, ROM), a solid state disk (solid state disk, SSD), a hard disk drive (hard disk drive, HDD), or an optical disc), and a volatile memory.

The communication interface 503 may be any one or any combination of the following components that have a network access function, for example, a network interface (for example, an Ethernet interface) or a wireless network interface card.

The communication interface 503 is used by the database recovery apparatus 500 to perform data communication with another device or component.

FIG. 5 further illustrates a bus 504. The processor 501, the memory 502, and the communication interface 503 may be connected through the bus 504. In this way, the processor 501 may access the memory 502 through the bus 504, and may further exchange data with another device or component through the communication interface 503.

In this application, the database recovery apparatus 500 executes the computer instructions in the memory 502, to implement the database recovery method provided in this application. For example, in response to receiving, at a first moment, a first recovery instruction for a database, an LSN and time association log is queried, based on a first recovery moment indicated by the first recovery instruction, for a first LSN corresponding to the first recovery moment. The LSN and time association log is used to record LSNs respectively corresponding to a plurality of moments in the database. The first recovery moment is earlier than the first moment in time sequence. First recovery data of the database is obtained based on the first LSN. Data recovery is performed on the database based on the first recovery data, to obtain a database corresponding to the first recovery moment. Then, a start LSN used by the database corresponding to the first recovery moment is greater than an LSN corresponding to the first moment. In addition, for an implementation process in which the database recovery apparatus 500 executes the computer instructions in the memory 502 to perform the steps of the database recovery method provided in this application, refer to corresponding descriptions in the foregoing method embodiments.

An embodiment of this application further provides a computer-readable storage medium. The computer-readable storage medium is a non-volatile computer-readable storage medium. The computer-readable storage medium includes program instructions. When the program instructions are run on a computer device, the computer device is enabled to perform the database recovery method provided in embodiments of this application.

An embodiment of this application further provides a computer program product including instructions. When the computer program product runs on a computer, the computer is enabled to perform the database recovery method provided in embodiments of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A database recovery method, wherein the method comprises:
in response to receiving, at a first moment, a first recovery instruction for a database, querying, based on a first recovery moment indicated by the first recovery instruction, a log sequence number LSN and time association log for a first LSN corresponding to the first recovery moment, wherein the LSN and time association log is used to record LSNs respectively corresponding to a plurality of moments in the database, and the first recovery moment is earlier than the first moment in time sequence;
obtaining first recovery data of the database based on the first LSN; and
performing data recovery on the database based on the first recovery data, to obtain a database corresponding to the first recovery moment, wherein a start LSN used by the database corresponding to the first recovery moment is greater than an LSN corresponding to the first moment.

2. The method according to claim 1, wherein the start LSN used by the database corresponding to the first recovery moment is a next LSN of the LSN corresponding to the first moment.

3. The method according to claim 1 or 2, wherein after performing the data recovery on the database based on the first recovery data, to obtain the database corresponding to the first recovery moment, the method further comprises:
in response to receiving an operation instruction for the database corresponding to the first recovery moment, executing the operation instruction, and generating a redo log corresponding to the operation instruction, wherein an LSN of the redo log is greater than the LSN corresponding to the first moment.

4. The method according to any one of claims 1 to 3, wherein obtaining the first recovery data of the database based on the first LSN comprises:
obtaining a first full backup snapshot from a full backup of the database based on the first LSN, wherein an LSN of the first full backup snapshot is less than the first LSN; and
obtaining a first redo log set from an incremental backup of the database based on the LSN of the first full backup snapshot and the first LSN, wherein the first redo log set comprises a redo log whose LSN is between the LSN of the first full backup snapshot and the first LSN; and
performing the data recovery on the database based on the first recovery data, to obtain the database corresponding to the first recovery moment comprises:
updating the database to a first database obtained through recovery by using the first full backup snapshot; and
sequentially performing forward recovery on the first database in ascending order of LSNs by using the redo log in the first redo log set, to obtain the database corresponding to the first recovery moment.

5. The method according to any one of claims 1 to 3, wherein obtaining the first recovery data of the database based on the first LSN comprises:
obtaining a second full backup snapshot from a full backup of the database based on the first LSN, wherein an LSN of the second full backup snapshot is greater than the first LSN; and
obtaining a second redo log set from an incremental backup of the database based on the first LSN and the LSN of the second full backup snapshot, wherein the second redo log set comprises a redo log whose LSN is between the first LSN and the LSN of the second full backup snapshot; and
performing the data recovery on the database based on the first recovery data, to obtain the database corresponding to the first recovery moment comprises:
updating the database to a second database obtained through recovery by using the second full backup snapshot; and
sequentially performing reverse recovery on the second database in descending order of LSNs by using the redo log in the second redo log set, to obtain the database corresponding to the first recovery moment.

6. The method according to any one of claims 1 to 3, wherein obtaining the first recovery data of the database based on the first LSN comprises:
obtaining a third full backup snapshot from a full backup of the database based on the first LSN, wherein an LSN of the third full backup snapshot is equal to the first LSN; and
performing the data recovery on the database based on the first recovery data, to obtain the database corresponding to the first recovery moment comprises:
updating the database to a third database obtained through recovery by using the third full backup snapshot, and using the third database as the database corresponding to the first recovery moment.

7. The method according to any one of claims 1 to 3, wherein the first recovery instruction is a 1^{st} recovery instruction for the database, and obtaining the first recovery data of the database based on the first LSN comprises:
obtaining a third redo log set from an incremental backup of the database based on the first LSN and the LSN corresponding to the first moment, wherein the third redo log set comprises a redo log whose LSN is between the first LSN and the LSN corresponding to the first moment; and
performing the data recovery on the database based on the first recovery data, to obtain the database corresponding to the first recovery moment comprises:
sequentially performing reverse recovery on the database in descending order of LSNs by using the redo log in the third redo log set, to obtain the database corresponding to the first recovery moment.

8. The method according to any one of claims 1 to 3, wherein the first recovery instruction is an n^{th} recovery instruction for the database, n≥2, and obtaining the first recovery data of the database based on the first LSN comprises:
obtaining a fourth redo log set from an incremental backup of the database based on the first LSN and the LSN corresponding to the first moment, wherein the fourth redo log set comprises a redo log whose LSN is between a start LSN used by a database corresponding to a previous recovery moment and the LSN corresponding to the first moment, and a redo log whose LSN is between an LSN corresponding to the previous recovery moment and the first LSN; and
performing the data recovery on the database based on the first recovery data, to obtain the database corresponding to the first recovery moment comprises:
sequentially performing reverse recovery on the database in descending order of LSNs by using the redo log whose LSN is between the start LSN used by the database corresponding to the previous recovery moment and the LSN corresponding to the first moment, to obtain the database corresponding to the previous recovery moment; and
performing, by using the redo log whose LSN is between the LSN corresponding to the previous recovery moment and the first LSN, recovery on the database corresponding to the previous recovery moment, to obtain the database corresponding to the first recovery moment.

9. The method according to any one of claims 1 to 8, wherein after performing the data recovery on the database based on the first recovery data, to obtain the database corresponding to the first recovery moment, the method further comprises:
in response to receiving, at a second moment, a second recovery instruction for the database, querying, based on a second recovery moment indicated by the second recovery instruction, the LSN and time association log for a second LSN corresponding to the second recovery moment, wherein the second recovery moment is earlier than the second moment in time sequence;
obtaining second recovery data of the database based on the second LSN; and
performing data recovery on the database based on the second recovery data, to obtain a database corresponding to the second recovery moment, wherein a start LSN used by the database corresponding to the second recovery moment is greater than an LSN corresponding to the second moment.

10. The method according to claim 9, wherein the second recovery moment is later than the first recovery moment in time sequence, and the second recovery moment is earlier than the first moment in time sequence.

11. The method according to any one of claims 1 to 10, wherein the method further comprises:
adding database recovery timeline information corresponding to the first recovery moment to a timeline log, wherein the database recovery timeline information comprises a recovery LSN, a start LSN, and an end LSN, the recovery LSN is the first LSN, the start LSN is the start LSN used by the database corresponding to the first recovery moment, and the end LSN is an LSN corresponding to an end moment of a next recovery instruction.

12. A database recovery apparatus, wherein the apparatus comprises:
a query module, configured to: in response to receiving, at a first moment, a first recovery instruction for a database, query, based on a first recovery moment indicated by the first recovery instruction, a log sequence number LSN and time association log for a first LSN corresponding to the first recovery moment, wherein the LSN and time association log is used to record LSNs respectively corresponding to a plurality of moments in the database, and the first recovery moment is earlier than the first moment in time sequence;
an obtaining module, configured to obtain first recovery data of the database based on the first LSN; and
a data recovery module, configured to perform data recovery on the database based on the first recovery data, to obtain a database corresponding to the first recovery moment, wherein a start LSN used by the database corresponding to the first recovery moment is greater than an LSN corresponding to the first moment.

13. The apparatus according to claim 12, wherein the start LSN used by the database corresponding to the first recovery moment is a next LSN of the LSN corresponding to the first moment.

14. The apparatus according to claim 12 or 13, wherein the apparatus further comprises:
an instruction execution module, configured to: after the data recovery is performed on the database based on the first recovery data to obtain the database corresponding to the first recovery moment, execute, in response to receiving an operation instruction for the database corresponding to the first recovery moment, the operation instruction; and
a generation module, configured to generate a redo log corresponding to the operation instruction, wherein an LSN of the redo log is greater than the LSN corresponding to the first moment.

15. The apparatus according to any one of claims 12 to 14, wherein
the obtaining module is configured to: obtain a first full backup snapshot from a full backup of the database based on the first LSN, wherein an LSN of the first full backup snapshot is less than the first LSN; and obtain a first redo log set from an incremental backup of the database based on the LSN of the first full backup snapshot and the first LSN, wherein the first redo log set comprises a redo log whose LSN is between the LSN of the first full backup snapshot and the first LSN; and
the data recovery module is configured to: update the database to a first database obtained through recovery by using the first full backup snapshot; and sequentially perform forward recovery on the first database in ascending order of LSNs by using the redo log in the first redo log set, to obtain the database corresponding to the first recovery moment.

16. The apparatus according to any one of claims 12 to 14, wherein
the obtaining module is configured to: obtain a second full backup snapshot from a full backup of the database based on the first LSN, wherein an LSN of the second full backup snapshot is greater than the first LSN; and obtain a second redo log set from an incremental backup of the database based on the first LSN and the LSN of the second full backup snapshot, wherein the second redo log set comprises a redo log whose LSN is between the first LSN and the LSN of the second full backup snapshot; and
the data recovery module is configured to: update the database to a second database obtained through recovery by using the second full backup snapshot; and sequentially perform reverse recovery on the second database in descending order of LSNs by using the redo log in the second redo log set, to obtain the database corresponding to the first recovery moment.

17. The apparatus according to any one of claims 12 to 14, wherein
the obtaining module is configured to obtain a third full backup snapshot from a full backup of the database based on the first LSN, wherein an LSN of the third full backup snapshot is equal to the first LSN; and
the data recovery module is configured to: update the database to a third database obtained through recovery by using the third full backup snapshot, and use the third database as the database corresponding to the first recovery moment.

18. The apparatus according to any one of claims 12 to 14, wherein the first recovery instruction is a 1^{st} recovery instruction for the database;
the obtaining module is configured to obtain a third redo log set from an incremental backup of the database based on the first LSN and the LSN corresponding to the first moment, wherein the third redo log set comprises a redo log whose LSN is between the first LSN and the LSN corresponding to the first moment; and
the data recovery module is configured to sequentially perform reverse recovery on the database in descending order of LSNs by using the redo log in the third redo log set, to obtain the database corresponding to the first recovery moment.

19. The apparatus according to any one of claims 12 to 14, wherein the first recovery instruction is an n^{th} recovery instruction for the database, wherein n≥2;
the obtaining module is configured to obtain a fourth redo log set from an incremental backup of the database based on the first LSN and the LSN corresponding to the first moment, wherein the fourth redo log set comprises a redo log whose LSN is between a start LSN used by a database corresponding to a previous recovery moment and the LSN corresponding to the first moment, and a redo log whose LSN is between an LSN corresponding to the previous recovery moment and the first LSN; and
the data recovery module is configured to: sequentially perform reverse recovery on the database in descending order of LSNs by using the redo log whose LSN is between the start LSN used by the database corresponding to the previous recovery moment and the LSN corresponding to the first moment, to obtain the database corresponding to the previous recovery moment; and perform recovery on the database corresponding to the previous recovery moment by using the redo log whose LSN is between the LSN corresponding to the previous recovery moment and the first LSN, to obtain the database corresponding to the first recovery moment.

20. The apparatus according to any one of claims 12 to 19, wherein
the query module is further configured to: after data recovery is performed on the database based on the first recovery data to obtain the database corresponding to the first recovery moment, in response to receiving, at a second moment, a second recovery instruction for the database, query, based on a second recovery moment indicated by the second recovery instruction, the LSN and time association log for a second LSN corresponding to the second recovery moment, wherein the second recovery moment is earlier than the second moment in time sequence;
the obtaining module is further configured to obtain second recovery data of the database based on the second LSN; and
the data recovery module is further configured to perform data recovery on the database based on the second recovery data, to obtain a database corresponding to the second recovery moment, wherein a start LSN used by the database corresponding to the second recovery moment is greater than an LSN corresponding to the second moment.

21. The apparatus according to claim 20, wherein the second recovery moment is later than the first recovery moment in time sequence, and the second recovery moment is earlier than the first moment in time sequence.

22. The apparatus according to any one of claims 12 to 21, wherein the apparatus further comprises:
an information adding module, configured to add, to a timeline log, database recovery timeline information corresponding to the first recovery moment, wherein the database recovery timeline information comprises a recovery LSN, a start LSN, and an end LSN, the recovery LSN is the first LSN, the start LSN is the start LSN used by the database corresponding to the first recovery moment, and the end LSN is an LSN corresponding to an end moment of a next recovery instruction.

23. A database recovery apparatus, comprising a memory and a processor, wherein the memory stores program instructions, and the processor runs the program instructions to perform the method according to any one of claims 1 to 11.

24. A computer-readable storage medium, comprising program instructions, wherein when the program instructions are run on a computer device, the computer device is enabled to perform the method according to any one of claims 1 to 11.

25. A computer program product, wherein when the computer program product runs on a computer, the computer is enabled to perform the method according to any one of claims 1 to 11.
